# EUROPEAN PATENT SPECIFICATION

(11) **EP 2 315 520 B1**
(45) Date of publication and mention of the grant of the patent: **01.02.2012**
(21) Application number: 09788221.1
(22) Date of filing: 10.07.2009
(51) Int. Cl.: A01K 31/14

(54) **NESTING BOX FOR BIRDS, KIT OF PARTS AND METHOD**
NISTKASTEN FÜR VÖGEL, TEILEAUSRÜSTUNG UND VERFAHREN
NICHOIR POUR OISEAUX, ENSEMBLE DE PIÈCES ET PROCÉDÉ

(30) Priority: 27.08.2008 NL 2001926
(43) Date of publication of application: 04.05.2011
(73) Proprietor: Widee B.V., 7775 AC Lutten (NL)
(72) Inventor: DE WILDE, Gerrit Jan, NL-7788 AH Anerveen (NL)
(74) Representative: Schumann, Bernard Herman Johan
(86) International application number: PCT/NL2009/050417
(87) International publication number: WO 2010/024666

(56) References cited:
- EP-A- 0 224 690
- CH-A- 627 340
- DE-B- 1 210 238
- DE-U- 1 910 311
- US-A- 3 742 914

## Description

The invention relates to a nesting box for birds, comprising:
a housing with a bottom and a body, which body has an entrance aperture for allowing passage of birds;
a cover connected releasably to the top side of the body;
coupling means for coupling the nesting box to a support construction such as a wall, a pole or a tree.

The invention also relates to a kit of parts for manufacturing such a nesting box.

The invention further relates to a method for manufacturing such a nesting box.

Such a nesting box is known in diverse embodiments, see e.g. documents DE-U-1910311 and CH-A-627340.

It is an object of the invention to embody a nesting box such that its thermal insulation is improved, whereby birds present in the nesting box during the winter experience less discomfort from the cold and during the summer experience less discomfort from solar heat.

It is a further object of the invention to embody a nesting box such that using very simple means the entrance aperture can be selected between a relatively large and a relatively small entrance aperture, whereby respectively relatively large and relatively small birds will make use of the nesting box.

With a view to these objectives, the nesting box of the type described in the preamble has the feature that the housing comprises an inner housing and an outer housing which together bound a cavity;
the outer housing has at least one continuous hole;
the inner housing has at least two continuous holes, these holes having differing dimensions;
the inner housing can be rotated around a vertical axis such that, as desired, the one or the other hole in the inner housing can be placed into register with the hole in the outer housing; and
the hole in the outer housing is at least as large as the larger hole in the inner housing;
this such that two thus registered holes together form the entrance aperture.

The inner housing preferably has at least two holes lying diametrically opposite each other; wherein the inner housing can be rotated through 180° around a vertical axis.

The outer housing has at least two ventilation holes, and the inner housing has at least two ventilation holes, wherein the holes in the outer housing and the holes in the inner housing are positioned so as to be placed in register for the purpose of forming at least one ventilation opening in at least one rotation position of the inner housing in which two registered holes together form the entrance aperture.

At least some of the ventilation holes are preferably embodied as recesses in an upper edge of the inner housing and the outer housing.

In a preferred embodiment at least two ventilation holes are arranged on opposite sides of the body.

In a preferred embodiment at least one of the ventilation holes is also connected to the cavity bounded by the inner housing and the outer housing.

The coupling means are preferably releasable from the nesting box.

It is advantageous that the coupling means comprise at least one suspension bracket.

The outer housing is preferably provided with at least one tongue opening, and the suspension bracket is provided with at least one tongue adapted to engage releasably on the tongue opening of the outer housing.

The invention also relates to a kit of parts for assembling a nesting box according to the invention, comprising:
an inner housing and an outer housing for together forming a housing with a bottom and a body, this body having an entrance aperture allowing passage of birds,
a cover which can be connected releasably to the top side of the body; and
coupling means for coupling the nesting box to a support construction such as a wall, a pole or a tree.

In addition, the invention relates to a method for manufacturing a nesting box according to the invention, comprising the steps of
(a) forming a housing with an entrance aperture allowing passage of birds by placing an inner housing in an outer housing, wherein the outer housing has at least one continuous hole and the inner housing has at least two continuous holes, these holes having differing dimensions; and
(b) rotating the inner housing relative to the outer housing around a vertical axis such that, as desired, the one or the other hole in the inner housing is placed into register with the hole in the outer housing such that two thus registered holes together form the entrance aperture.

The invention will now be elucidated with reference to the accompanying drawings. In the drawings:
figure 1 shows an exploded view of a nesting box according to the invention in a random exemplary embodiment;
figures 2(A), (B), (C), (D), (E), (F) show respectively a front view, a side view from the lefthand side, a side view from the right-hand side, a rear view, a top view and a bottom view of the nesting box according to figure 1;
figure 3 is a perspective view at an angle from the rear which shows the manner in which the nesting box can be connected to a support construction;
figures 4A, 4B and 4C show side views as according to figure 2C of the nesting box with suspension bracket in respectively the phase in which the bottom of the nesting box is moved forward as first step for releasing the nesting box from the bracket; and the final phase in which the nesting box is moved upward from the position shown in figure 4B and is thus uncoupled from the suspension bracket.

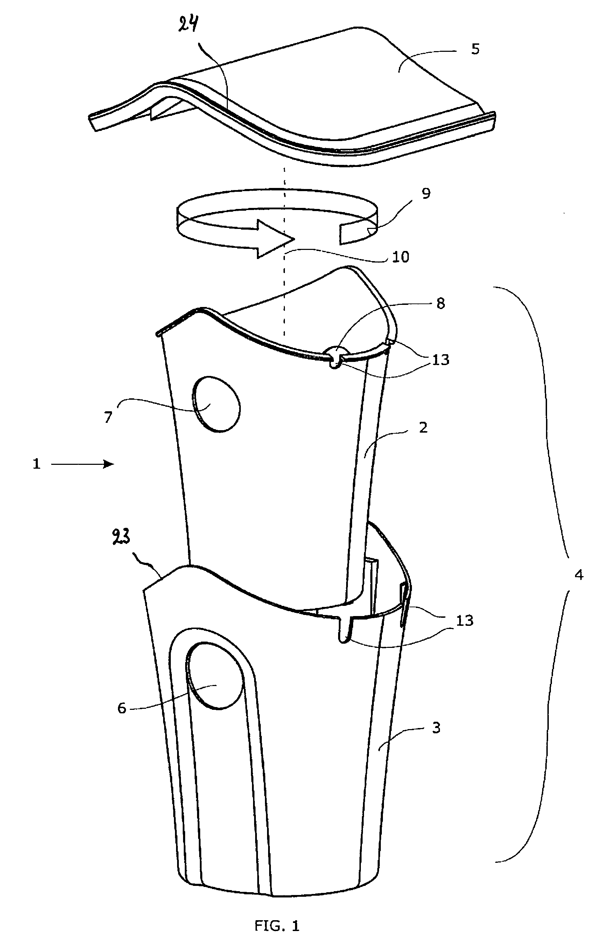

Figure 1 shows an exploded view of a nesting box 1 according to the invention. The nesting box comprises an inner housing 2 and an outer housing 3 which in the assembled state together bound an air cavity. Inner housing 2 and outer housing 3 together form a housing 4. Nesting box 1 further comprises a cover 5 connected releasably by means of snap connections to the top side of housing 4.

The outer housing has one continuous hole 6. Inner housing 2 has a continuous hole 7 and a second continuous hole 8, these holes having mutually differing dimensions. In this embodiment hole 7 has a larger diameter than hole 8. Hole 6 has a larger diameter than hole 7.

Holes 7 and 8 are placed at a position in the body of inner housing 2 such that, after assembly of housing 4 by placing inner housing 2 into outer housing 3, hole 7 or hole 8 is placed exactly in register with hole 6.

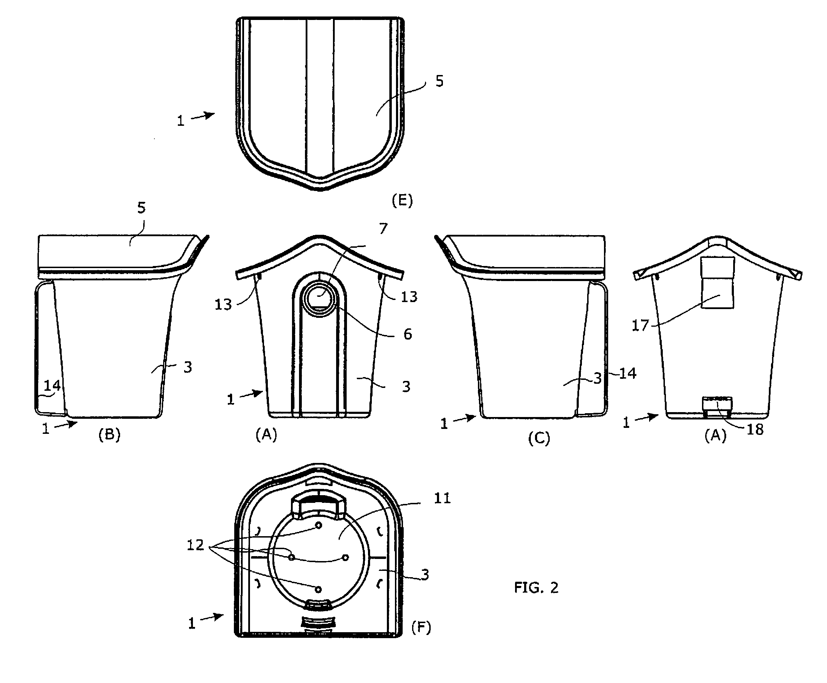

As shown in figure 2A, the round holes 6 and 7 are concentric in the assembled position. By rotating inner housing 2 around an axis 10 as according to an arrow 9 the smaller round hole 8 can be placed instead of round hole 7 into register with hole 6. This rotation takes place after inner housing 2 has been lifted over at least some height relative to the outer housing.

Not shown is that housing 4 has a bottom 11 which has four drainage holes 12.

After placing of inner housing 2 in the desired position, the roof can be snapped fixedly onto the upper edge zone 23 of outer housing 3.

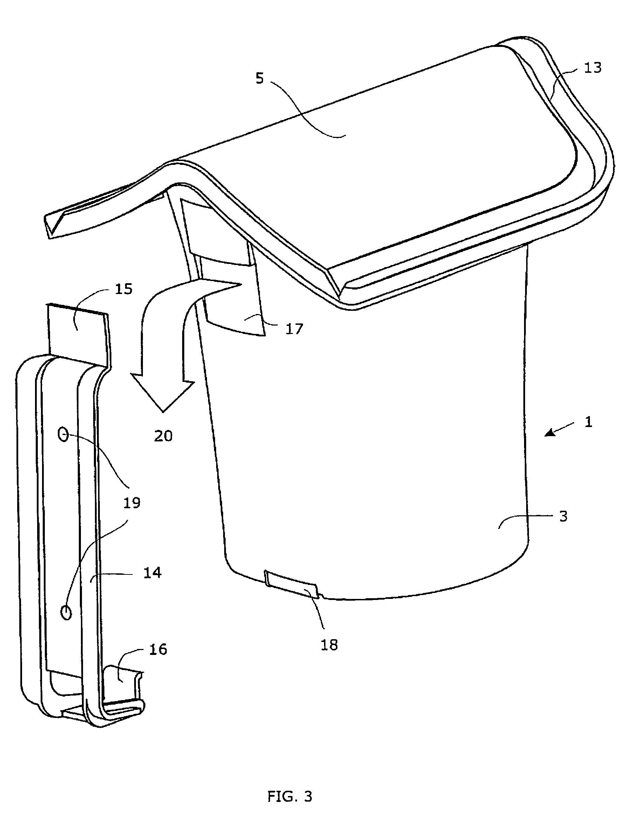

Cover 5 comprises a drainage gutter 24 extending along the sides and the front. As shown particularly clearly in figure 3, the gutter can drain at the rear, for instance along a wall or other support construction.

Attention is drawn to the specific roof form of cover 5 which, in addition to having an attractive appearance, also ensures a good drainage.

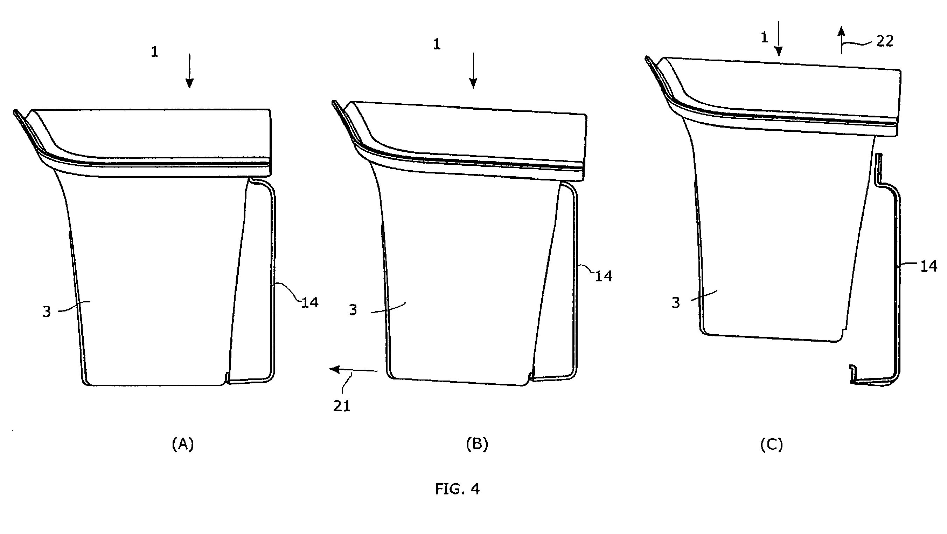

Figures 2B, 2C, 4A, 4B and 4C among others show that cover 5 protrudes over hole 6 in the outer housing such that rain entering the housing is precluded in most commonly occurring conditions.

Outer housing 3 and inner housing 2 have pairwise registered ventilation openings, all designated with reference numeral 13. These are embodied as recesses in the respective upper edges of outer housing 3 and inner housing 2. Because two pairs of holes are present on both sides, and therefore four pairs of registered holes are effectively present, the ventilation in the interior space of nesting box 1 will be very good, certainly in combination with the entrance aperture, consisting of hole 6 together with either hole 7 or hole 8.

Figure 3 shows that a suspension bracket 14 can be coupled to outer housing 3. For this purpose outer bracket 14 has an upward oriented upper tongue 15 and a lower downward oriented tongue 16. These tongues can hook into respectively an opening 17 and an opening 18 on the rear side of outer housing 3. Once the for instance steel bracket, which is suitable for a flat as well as a round support construction, has been fixed for instance by means of screws via screw holes 19, nesting box 1 can be coupled thereto as indicated schematically with an arrow 20.

Figure 4A shows the coupled position.

Figure 4B shows that the underside of nesting box 1 can be moved forward as according to an arrow 21, and that nesting box 1 can then be removed completely from bracket 14 by moving nesting box 1 upward as according to arrow 22 in figure 4C.

In order to ensure that the cavity between inner housing 2 and outer housing 3 is ventilated to only limited extent, the upper edge of inner housing 2 has an edge bent outward through about 90° which fits more or less against the inner surface of outer housing 3. Some ventilation of the cavity is ensured by the space between ventilation openings 13 of inner housing 2 and ventilation openings 13 of outer housing 3, and also due to the distance between the main plane of hole 6 and hole 7 or hole 8.

Apart from the bracket, all the shown components of nesting box 1 can be manufactured from the suitable weather-resistant and UV-resistant plastic. It is noted that, despite the broad functionality of the nesting box according to the invention, the number of components is limited to only four, i.e. inner housing 2, outer housing 3, cover 5, all three of plastic, and the steel suspension bracket 14. As a result the nesting box can also be manufactured cheaply.

## Claims

1. Nesting box (1) for birds, comprising:
a housing with a bottom and a body, which body has an entrance aperture for allowing passage of birds;
a cover (5) connected releasably to the top side of the body;
coupling means for coupling the nesting box to a support construction such as a wall, a pole or a tree;
wherein
the housing comprises an inner housing (2) and an outer housing (3) which together bound a cavity;
the outer housing has at least one continuous hole (6),
the inner housing has at least two continuous holes (7,8), these holes having differing dimensions;
the inner housing can be rotated around a vertical axis (10) such that, as desired, the one or the other hole (7,8) in the inner housing can be placed into register with the hole (6) in the outer housing; and
the hole in the outer housing is at least as large as the larger hole in the inner housing;
this such that two thus registered holes together form the entrance aperture,
**characterized in that**
the outer housing has at least two ventilation holes (13); and
the inner housing has at least two ventilation holes (13),
wherein the holes (13) in the outer housing and the holes (13) in the inner housing are positioned so as to be placed in register for the purpose of forming at least one ventilation opening in at least one rotation position of the inner housing in which two registered holes together form the entrance aperture.

2. Nesting box as claimed in claim 1,
**characterized in that**
the inner housing has at least two holes (7,8) lying diametrically opposite each other through 180°;
wherein the inner housing can be rotated around a vertical axis (10).

3. Nesting box as claimed in claim 2,
**characterized in that**
at least some of the ventilation holes (13) are embodied as recesses in an upper edge of the inner housing and the outer housing.

4. Nesting box as claimed in claim 3,
**characterized in that**
at least two ventilation holes (13) are arranged on opposite sides of the body.

5. Nesting box as claimed in any of the claims 3-4,
**characterized in that**
at least one of the ventilation holes (13) is also connected to the cavity bounded by the inner housing and the outer housing.

6. Nesting box as claimed in any of the foregoing claims,
**characterized in that**
the coupling means are releasable from the nesting box (1).

7. Nesting box as claimed in any of the foregoing claims,
**characterized in that**
the coupling means comprise at least one suspension bracket (14).

8. Nesting box as claimed in claim 7,
**characterized in that**
the outer housing is provided with at least one tongue opening (17,18), and the suspension bracket is provided with at least one tongue (15,16) adapted to engage releasably on the tongue opening of the outer housing.

9. Kit of parts for assembling a nesting box as claimed in any of the foregoing claims, comprising:
an inner housing (2) and an outer housing (3) for together forming a housing with a bottom and a body, this body having an entrance aperture allowing passage of birds,
a cover (5) which can be connected releasably to the top side of the body; and
coupling means for coupling the nesting box to a support construction such as a wall, a pole or a tree.

10. Method for manufacturing a nesting box as claimed in any of the claims 1-8, comprising the steps of:
(a) forming a housing (1) with an entrance aperture allowing passage of birds by placing an inner housing (2) in an outer housing (3), wherein the outer housing has at least one continuous hole (6) and the inner housing has at least two continuous holes (7,8), these holes having differing dimensions; and
(b) rotating the inner housing relative to the outer housing around a vertical axis such that, as desired, the one or the other hole in the inner housing is placed into register with the hole in the outer housing such that two thus registered holes together form the entrance aperture.

## Patentansprüche

1. Nistkasten (1) für Vögel, umfassend:
ein Gehäuse mit Boden und Korpus, welches eine Eingangsöffnung hat, um den Vögeln den Durchgang zu ermöglichen;
einen Deckel (5), der lösbar mit der Oberseite des Korpus verbunden ist;
Befestigungsmittel, um den Nistkasten an einer Tragekonstruktion, wie einer Wand, einen Pfosten oder einen Baum, zu befestigen;
wobei
das Gehäuse ein inneres Gehäuse (2) und ein äußeres Gehäuse (3) umfasst, die zusammen einen Hohlraum begrenzen;
das äußere Gehäuse wenigstens eine durchgängige Öffnung (6) hat,
das innere Gehäuse wenigstens zwei durchgängige Öffnungen (7, 8) hat,
diese Öffnungen verschiedene Größen haben;
das innere Gehäuse um die vertikale Achse (10) gedreht werden kann, sodass, falls gewünscht, die eine oder die andere Öffnung (7, 8) im inneren Gehäuse und die Öffnung (6) im äußeren Gehäuse übereinander platziert werden können; und
die Öffnung im äußeren Gehäuse wenigstens so groß wie die größere Öffnung im inneren Gehäuse ist;
derartig bilden diese zwei so übereinander gelegten Öffnungen zusammen die Eingangsöffnung,
**dadurch gekennzeichnet, dass**
das äußere Gehäuse wenigstens zwei Belüftungsöffnungen (13) hat; und
das innere Gehäuse wenigstens zwei Belüftungsöffnungen (13) hat,
wobei die Öffnungen (13) in dem äußeren Gehäuse und die Öffnungen (13) in dem inneren Gehäuse so positioniert sind, dass sie für den Zweck, wenigstens eine Belüftungsöffnung in wenigstens einer Drehposition des inneren Gehäuses zu bilden, in der zwei übereinanderliegende Öffnungen zusammen die Eingangsöffnung bilden, übereinander platziert werden.

2. Nistkasten gemäß Anspruch 1,
**dadurch gekennzeichnet, dass**
das innere Gehäuse (7,8) wenigstens zwei Öffnungen hat, die sich diametral um 180° gegenüberliegen;
wobei das innere Gehäuse um die vertikale Achse (10) rotiert werden kann.

3. Nistkasten gemäß Anspruch 2,
**dadurch gekennzeichnet, dass**
wenigstens einige der Belüftungsöffnungen (13) als Aussparungen in einer oberen Kante des inneren Gehäuses und des äußeren Gehäuses ausgeführt sind.

4. Nistkasten gemäß Anspruch 3,
**dadurch gekennzeichnet, dass**
wenigstens zwei Belüftungsöffnungen (13) an den gegenüberliegenden Seiten des Korpus angeordnet sind.

5. Nistkasten gemäß den Ansprüchen 3 bis 4,
**dadurch gekennzeichnet, dass**
wenigstens eine der Belüftungsöffnungen (13) auch mit dem Hohlraum, der durch das innere und das äußere Gehäuse begrenzt wird, verbunden ist.

6. Nistkasten gemäß den vorangegangenen Ansprüchen,
**dadurch gekennzeichnet, dass**
die Befestigungsmittel lösbar von dem Nistkasten (1) sind.

7. Nistkasten gemäß den vorangegangenen Ansprüchen,
**dadurch gekennzeichnet, dass**
die Befestigungsmittel wenigstens eine Aufhängekonsole (14) umfassen.

8. Nistkasten gemäß Anspruch 7,
**dadurch gekennzeichnet, dass**
das äußere Gehäuse mit wenigstens einer länglichen Öffnung (17, 18) ausgestattet ist, und die Aufhängekonsole mit wenigstens einer Lasche (15, 16) ausgerüstet ist, so angepasst, dass sie lösbar mit der länglichen Öffnung des äußeren Gehäuses ineinander greift.

9. Bausatz von Teilen für die Montage eines Nistkastens gemäß den vorangegangenen Ansprüchen, umfassend:
ein inneres Gehäuse (2) und ein äußeres Gehäuse (3), um zusammen ein Gehäuse mit einem Boden und einem Korpus zu bilden, dieser Korpus hat eine Eingangsöffnung, die den Vögeln den Durchgang ermöglicht,
ein Deckel (5), der lösbar mit der Oberseite des Korpus verbunden werden kann; und
Befestigungsmittel für die Befestigung des Nistkastens an einer Tragekonstruktion, wie einer Wand, einem Pfosten oder einem Baum.

10. Methode für die Herstellung eines Nistkastens gemäß den Ansprüchen 1-8, folgende Schritte umfassend:
(a) Bilden eines Gehäuses (1) mit einer Eingangsöffnung, die Vögeln durch Platzieren eines inneren Gehäuses (2) und eines äußeren Gehäuses (3) den Durchgang ermöglicht, wobei das äußere Gehäuse wenigstens eine durchgängige Öffnung (6) hat und das innere Gehäuse wenigstens zwei durchgängige Öffnungen (7, 8) hat, diese Öffnungen haben verschiedene Größen; und
(b) Rotieren des inneren Gehäuses relativ zum äußeren Gehäuse um die vertikale Achse, sodass, falls gewünscht, die eine oder die andere Öffnung in dem inneren Gehäuse mit der Öffnung in dem äußeren Gehäuse übereinander platziert ist, so dass zwei so übereinander liegende Öffnungen zusammen die Eingangsöffnung bilden.

## Revendications

1. Nichoir (1) pour oiseaux, comprenant:
un boîtier avec un fond et un corps, lequel corps possède une ouverture d'entrée pour permettre le passage d'oiseaux;
un couvercle (5) relié de manière libérable au côté supérieur du corps;
des moyens de couplage pour coupler le nichoir à une structure de support telle qu'un mur, un poteau ou un arbre;
où le boîtier comprend un boîtier intérieur (2) et un boîtier extérieur (3) qui délimitent conjointement une cavité;
le boîtier extérieur possède au moins un trou continu (6),
le boîtier intérieur possède au moins deux trous continus (7, 8),
ces trous ayant des dimensions différentes;
le boîtier intérieur peut tourner autour d'un axe vertical (10) de sorte que, si désiré, l'un ou l'autre trou (7, 8) dans le boîtier intérieur peut être placé pour coïncider avec le trou (6) dans le boîtier extérieur; et
le trou dans le boîtier extérieur est au moins aussi grand que le trou plus grand dans le boîtier intérieur;
de sorte que deux trous qui coïncident ainsi forment conjointement l'ouverture d'entrée,
**caractérisé en ce que** le boîtier extérieur possède au moins deux trous de ventilation (13); et
le boîtier intérieur possède au moins deux trous de ventilation (13),
où les trous (13) dans le boîtier extérieur et les trous (13) dans le boîtier intérieur sont positionnés de manière à être placé en coïncidence dans le but de former au moins une ouverture de ventilation dans au moins une position de rotation du boîtier intérieur dans laquelle deux trous coïncidant forment conjointement l'ouverture d'entrée.

2. Nichoir selon la revendication 1, **caractérisé en ce que** le boîtier intérieur possède au moins deux trous (7, 8) reposant de manière diamétralement opposée l'un à l'autre de 180°;
où le boîtier intérieur peut tourner autour d'un axe vertical (10).

3. Nichoir selon la revendication 2, **caractérisé en ce qu'**au moins certains des trous de ventilation (13) sont réalisés sous forme d'évidements dans un bord supérieur du boîtier intérieur et du boîtier extérieur.

4. Nichoir selon la revendication 3, **caractérisé en ce qu'**au moins deux trous de ventilation (13) sont agencés sur des côtés opposés du corps.

5. Nichoir selon l'une quelconque des revendications 3 à 4, **caractérisé en ce qu'**au moins l'un des trous de ventilation (13) est également relié à la cavité délimitée par le boîtier intérieur et le boîtier extérieur.

6. Nichoir selon l'une quelconque des revendications précédentes, **caractérisé en ce que** les moyens de couplage sont libérables du nichoir (1).

7. Nichoir selon l'une quelconque des revendications précédentes, **caractérisé en ce que** les moyens de couplage comprennent au moins une console de suspension (14) .

8. Nichoir selon la revendication 7, **caractérisé en ce que** le boîtier extérieur est muni d'au moins une ouverture à languette (17, 18), et la console de suspension est munie d'au moins une languette (15, 16) adaptée pour s'emboîter de manière libérable sur l'ouverture à languette du boîtier extérieur.

9. Ensemble de pièces pour assembler un nichoir selon l'une quelconque des revendications précédentes, comprenant:
un boîtier intérieur (2) et un boîtier extérieur (3) pour former conjointement un boîtier avec un fond et un corps, ce corps ayant une ouverture d'entrée permettant le passage d'oiseaux,
un couvercle (5) qui peut être relié de manière libérable au côté supérieur du corps; et
des moyens de couplage pour coupler le nichoir à une structure de support telle qu'un mur, un poteau ou un arbre.

10. Procédé de fabrication d'un nichoir selon l'une quelconque des revendications 1 à 8, comprenant les étapes consistant à:
(a) former un boîtier (1) avec une ouverture d'entrée permettant le passage d'oiseaux en plaçant un boîtier intérieur (2) dans un boîtier extérieur (3), où le boîtier extérieur possède au moins un trou continu (6) et le boîtier intérieur possède au moins deux trous continus (7, 8), ces trous ayant des dimensions différentes; et
(b) faire tourner le boîtier intérieur par rapport au boîtier extérieur autour d'un axe vertical de sorte que, si désiré, l'un ou l'autre trou dans le boîtier intérieur est placé en coïncidence avec le trou dans le boîtier extérieur de sorte que deux trous qui coïncident ainsi forment conjointement l'ouverture d'entrée.
